# EUROPEAN PATENT APPLICATION

(11) **EP 4 645 558 A1**
(43) Date of publication of application: **05.11.2025**
(21) Application number: 23911315.2
(22) Date of filing: 05.10.2023
(51) Int. Cl.: H01M 50/291, H01M 50/209, H01M 50/289, H01M 50/298, H01M 50/35, H01M 50/358, H01M 50/505, H01M 50/507

(54) **BATTERY PACK**

(30) Priority: 26.12.2022 JP 2022207813
(71) Applicant: Vehicle Energy Japan Inc., Ibaraki 312-8505 (JP)
(72) Inventor: CHIDA, Koji, Hitachinaka-shi, Ibaraki 312-8505 (JP)
(74) Representative: Mewburn Ellis LLP
(86) International application number: PCT/JP2023/036417
(87) International publication number: WO 2024/142531

(57) **Abstract**

To realize a battery pack in which a busbar case is not required.

A battery pack in which a plurality of battery cells are arranged together in a first direction, in which a first spacer or a second spacer is disposed between each pair of adjacent battery cells; the first spacer has a first side that extends in a second direction, a first U-like portion that extends in the first direction is formed in the first side, a first partition wall is formed on the outside of the first U-like portion in the second direction, the second spacer has a second side that extends in the second direction, a second U-like portion that has a U-like cross section and extends in the first direction is formed in the second side; a busbar housing portion is formed between a first partition wall formed in the first spacer and a different first partition wall formed in a different first spacer adjacent to the first spacer in the first direction, and the first U-like portions and the second U-like portions are continuously formed in the first direction to form wire housing portions that extend in the first direction.

## Description

### [Technical Field]

The present invention relates to a configuration regarding a busbar housing portion and a wire housing portion in which a voltage detection line is disposed in a battery pack in which a plurality of battery cells are arranged.

### [Background Art]

In conventional battery packs, busbar cases are used as busbar housing portions and exclusive members for housing voltage detection lines. PTL 1 describes a configuration in which a busbar case corresponding to the external shape of a cell stack, in which batteries are arranged, is disposed on the cell stack. PTL 2 describes a configuration in which a flexible wiring board is used as a voltage detection line instead of using a harness.

### [Citation List]

### [Patent Literature]

[PTL 1] Japanese Patent Application Publication No. 2018-26203
[PTL 2] Japanese Patent Application Publication No. 2015-22965

### [Summary of Invention]

### [Technical Problem]

Busbar cases require a new design for each structure of a new battery pack and have a large influence on cost.

### [Solution to Problem]

The present invention intends to solve the above-described problem, and the main configuration is as described below.
(1) A battery pack in which a plurality of battery cells having a rectangular external shape are arranged in a first direction,
   in which a first spacer having a rectangular external shape or a second spacer having a rectangular external shape is disposed between each pair of adjacent battery cells, the first spacer has a first side that extends in a second direction at a right angle to the first direction, a first U-like portion that has a U-like cross section and extends in the first direction is formed in the first side, a first partition wall that extends in the second direction is formed on an outside of the first U-like portion in the second direction; the second spacer has a second side that extends in the second direction, a second U-like portion that has a U-like cross section and extends in the first direction is formed in the second side; a busbar housing portion is formed between the first partition wall formed in the first spacer and a different first partition wall formed in a different first spacer adjacent to the first spacer in the first direction, and the first U-like portions and the second U-like portions are continuously formed in the first direction and form wire housing portions that extend in the first direction.
(2) The battery pack according to (1), in which the busbar housing portions are partitioned in the second direction by the first U-like portions and the second U-like portions.
(3) The battery pack according to (1), in which the first spacer has a first rib at an end portion in the second direction, the second spacer has a second rib at an end portion in the second direction; and end portions in the second direction of the busbar housing portions are partitioned by the first ribs and the second ribs.

### [Advantageous Effects of Invention]

The present invention is capable of securing a disposition configuration of wires such as a voltage detection line even without using a busbar case separately independent of a spacer. Alternatively, the present invention is capable of forming a busbar housing portion for housing a connection configuration of individual busbars even without using a busbar case separately independent of a spacer. Therefore, it is possible to reduce the cost of a battery module. Alternatively, compared with the case of using a busbar case separately independent of a spacer, since it is possible to suppress stress that arises from a difference in thermal expansion between a busbar case and the arrangement configuration of a battery, it is possible to improve the reliability of a battery module.

### [Brief Description of Drawings]

[Fig. 1]

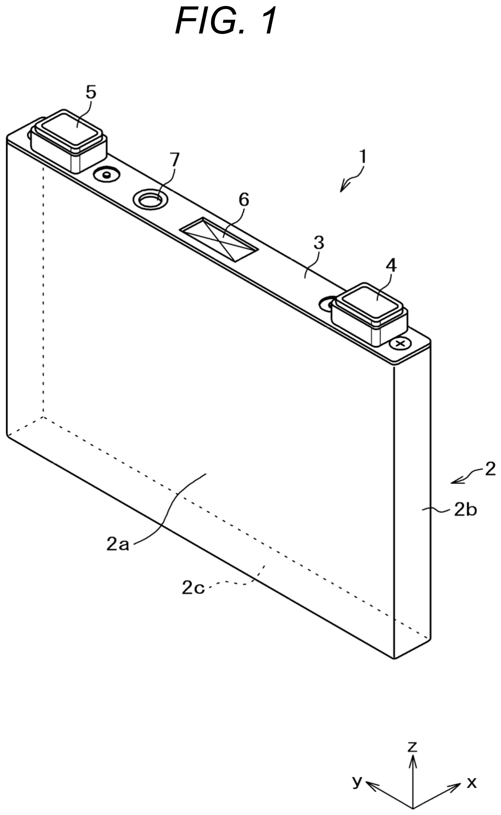

   Fig. 1 is a perspective view of a battery cell.
[Fig. 2]

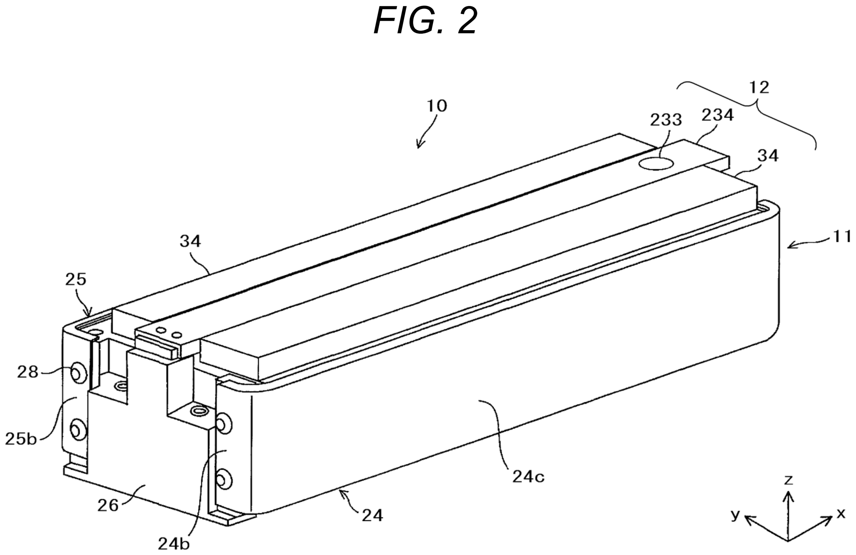

   Fig. 2 is a perspective view of the appearance of a battery pack in a comparative example.
[Fig. 3]

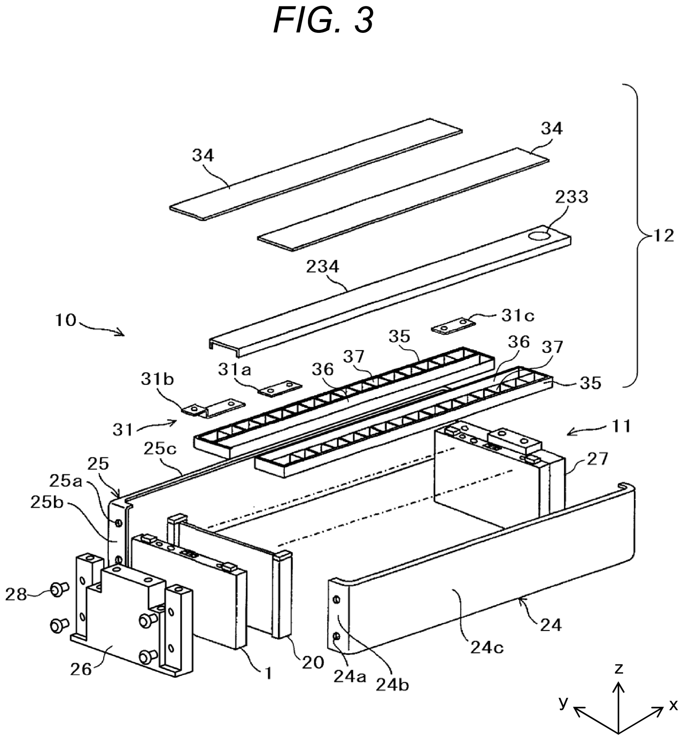

   Fig. 3 is an exploded perspective view of the battery pack in the comparative example.
[Fig. 4]

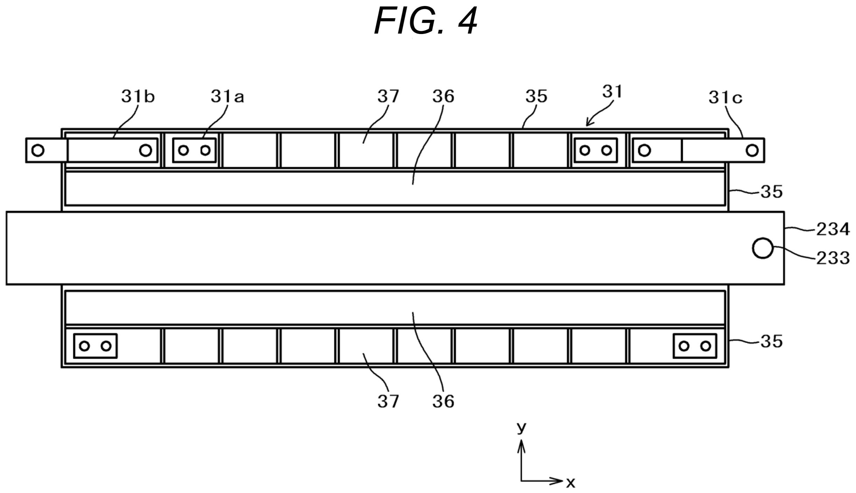

   Fig. 4 is a plan view of a busbar case in the comparative example.
[Fig. 5]

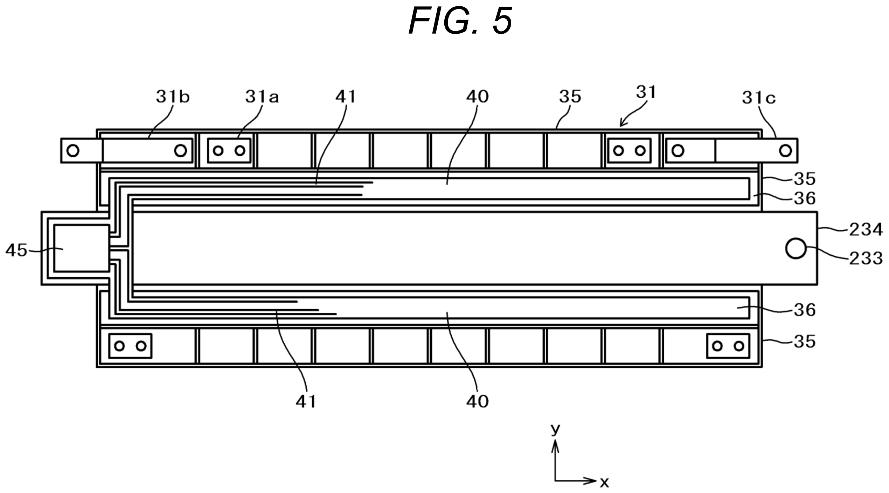

   Fig. 5 is a plan view showing a state where a busbar and a wire are housed in the busbar case in the comparative example.
[Fig. 6]

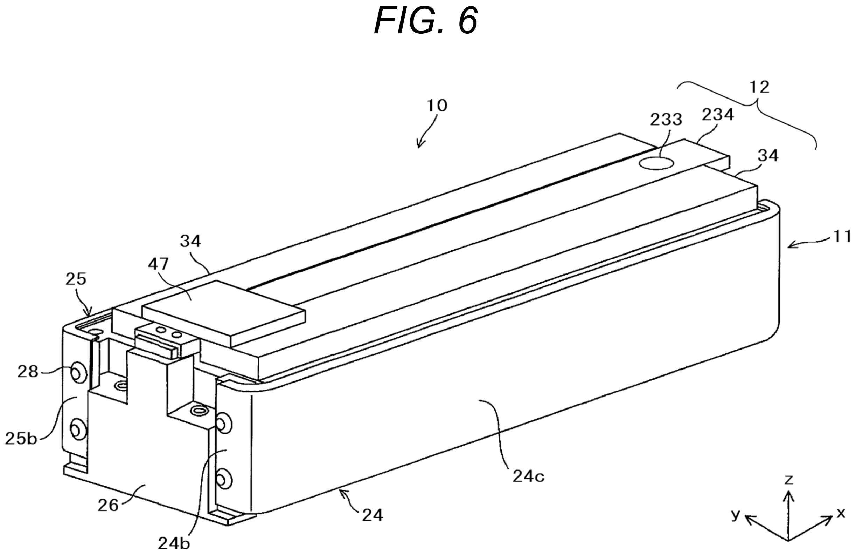

   Fig. 6 is a perspective view of a battery pack including a signal processing circuit protective case.
[Fig. 7]

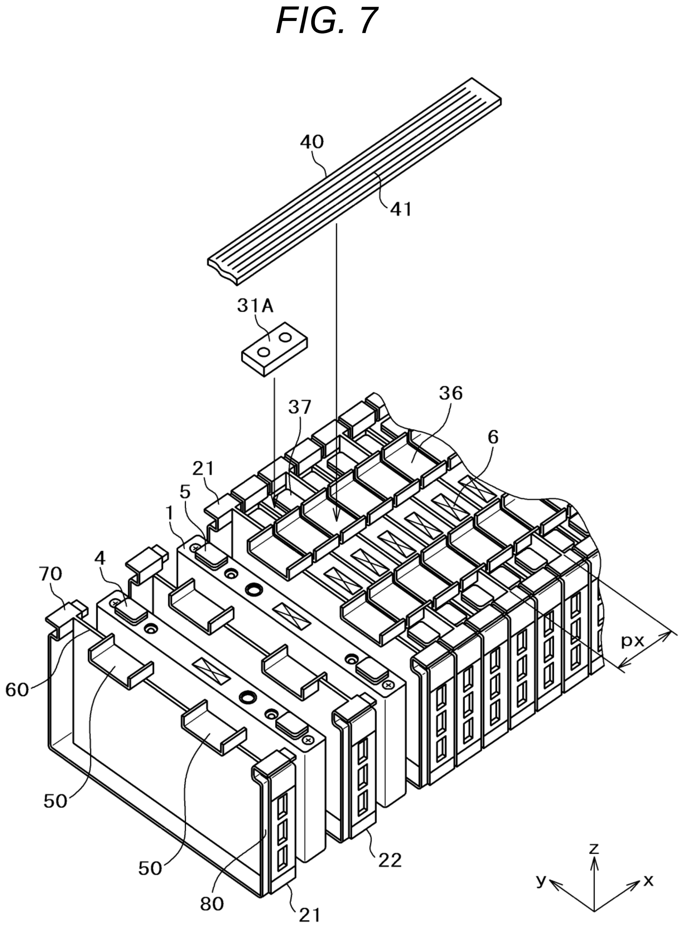

   Fig. 7 is a perspective view showing busbar housing portions and wire housing portions of Example 1.
[Fig. 8]

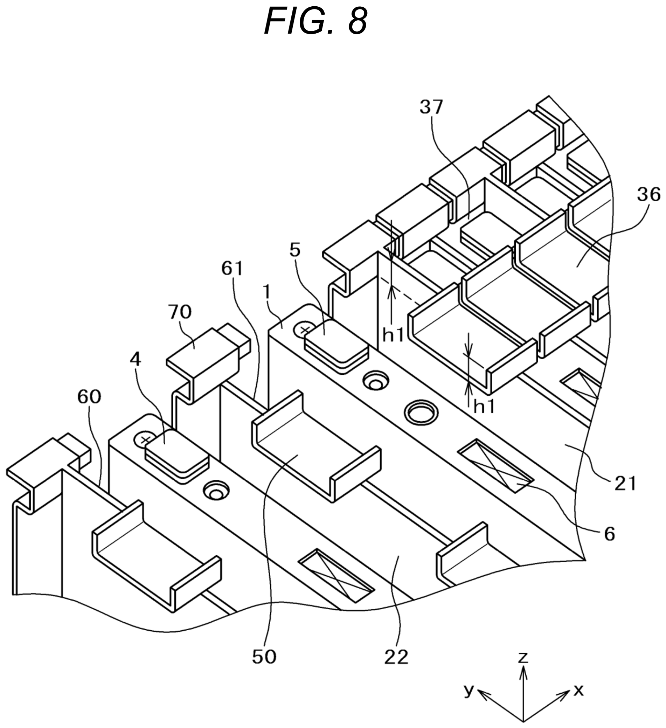

   Fig. 8 is an enlarged perspective view showing the busbar housing portions and the wire housing portions in Example 1.
[Fig. 9]

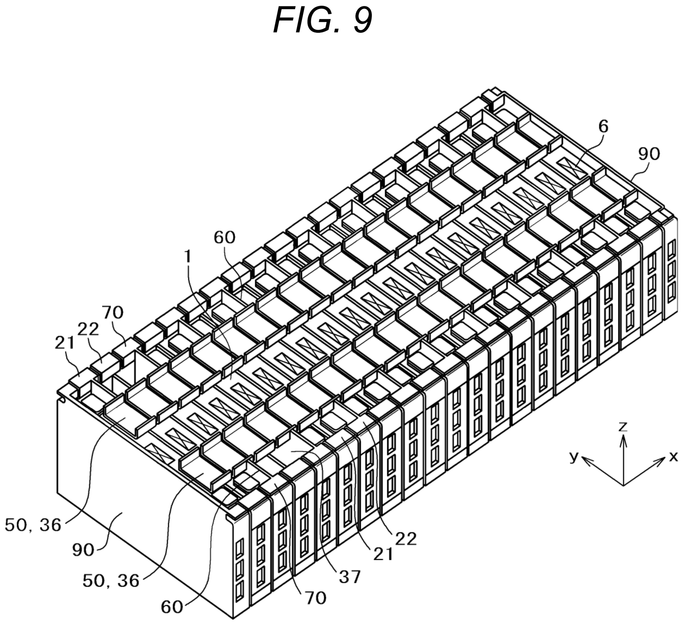

   Fig. 9 is a perspective view of a battery pack in Example 1.

### [Description of Embodiments]

Hereinafter, the contents of the present invention will be described in detail using examples. A feature of the present invention is a configuration in which a busbar case can be omitted; however, first, a configuration in the case of using a busbar case will be described as a comparative example. Even in the configuration of the comparative example, the configuration except a busbar can be applied as the configuration of the present invention.

Fig. 1 is a perspective view of a battery cell 1. As shown in Fig. 1, the battery cell 1 has a battery can 2, a battery lid 3, a positive electrode terminal 4, a negative electrode terminal 5, a gas exhaust valve 6, and a liquid injection plug 7, and an electrolytic solution, a charge/discharge element, and an insulation case (not shown). As the battery cell 1, a secondary battery that can be charged and discharged such as a lithium-ion secondary battery is used. A battery cell 1 of a first embodiment corresponds to a single battery in the battery pack according to one embodiment of the present invention.

The battery can 2 has a rectangular cuboid shape in which one end of the internal space is open and is made of aluminum or an aluminum alloy. The battery can 2 has a pair of facing side plates 2a having a large area, a pair of facing side plates 2b having a small area, and a bottom plate 2c on a side opposite to the opening. In the internal space of the battery can 2, the charge/discharge element is housed in a state of being covered with the insulation case, and the electrolytic solution has been injected thereinto. A positive electrode of the charge/discharge element is connected to the positive electrode terminal 4, and a negative electrode of the charge/discharge element is connected to the negative electrode terminal 5.

The battery lid 3 has a rectangular flat plate shape that is the same as the bottom plate 2c, is made of aluminum or an aluminum alloy and blocks the opening portion of the battery can 2. The battery lid 3 is joined to the opening portion of the battery can 2 by joining means such as laser welding. A liquid injection hole, not shown, is formed to penetrate the battery lid 3, the electrolytic solution is injected through the liquid injection hole, and the liquid injection hole is blocked with the liquid injection plug 7.

In the central portion of the battery lid 3, the gas exhaust valve 6 is provided. When the battery cell 1 generates heat and gas due to an abnormality such as overcharging and the internal pressure of the battery can 2 increases to reach a predetermined pressure, the gas exhaust valve 6 splits open and exhausts the gas from the inside of the container, thereby reducing the internal pressure of the battery can 2.

In addition, at one side end portion and the other side end portion of the battery lid 3, through holes, not shown, have been formed, and the positive electrode terminal 4 and the negative electrode terminal 5 have been installed. Portions of the positive electrode terminal 4 and the negative electrode terminal 5 that are exposed to the outside from the battery lid 3 are each formed as a rectangular cuboid and each have a flat top surface. Electricity generated in the battery cell 1 is supplied to an external device through the positive electrode terminal 4 and the negative electrode terminal 5 or electricity generated outside is supplied to the charge/discharge element through the positive electrode terminal 4 and the negative electrode terminal 5, whereby the battery cell 1 is charged.

Fig. 2 is a perspective view showing the appearance of a battery pack in the comparative example. A battery pack 10 is mounted in, for example, a hybrid vehicle that is driven with an internal combustion engine and a motor or an electrical vehicle that is driven with a motor and is used as a drive source of the motor. As shown in Fig. 2, the battery pack 10 has a block 11 and a busbar case assembly 12.

Fig. 3 is an exploded perspective view of the battery pack in the comparative example. As shown in Fig. 3, the block 11 has a plurality of battery cells 1 and spacers 20 arranged together, a pair of end plates 26 and 27, and a pair of side rails 24 and 25. The block 11 is an arrangement structure in which each configuration element has been integrated with the battery cells 1 and the spacers 20 arranged together.

The spacers 20 are made of an insulating synthetic resin, are alternately sandwiched between the adjacent battery cells 1 as shown in Fig. 3 and are arranged together with the battery cells 1 in an x direction (also referred to as a first direction). Each spacer 20 has recess portions corresponding to the shape of the battery cell 1 on both surfaces, holds the battery cells 1 with the recess portions and regulates a y direction (also referred to as a second direction) and a z direction (also referred to as a third direction).

The end plate 26 is formed of a plate-like die-cast aluminum member. While not shown in Fig. 3, a spacer 21 is present between the end plate 26 and the battery cell 1 and is disposed in the arrangement direction of the battery cells 1. The end plate 26 has fixing portions in which fixing bolt holes for fixing the side rail 24 and the side rail 25 have been formed.

In the end plate 26, the fixing bolt hole and a gas exhaust duct fixing hole have been formed. The fixing bolt hole corresponds to a fixing portion that fixes the battery pack, and the gas exhaust duct fixing hole corresponds to a gas exhaust duct that exhausts gas emitted from the inside of a single battery to the outside of the battery pack.

The end plate 27 has been formed in the same manner as the end plate 26. That is, while not shown in Fig. 3, a spacer 21 is present between the end plate 27 and the battery cell 1 and is disposed in the arrangement direction of the battery cells 1. In the end plate 27 as well, the fixing bolt hole for fixing the battery pack 10, a negative electrode connection terminal, and a fixing hole for the gas exhaust duct have been formed. The end plate 26, the end plate 27, and individual bend portions 24b and 25b of the side rail 24 and the side rail 25 are configured to be fastened with bolts 28.

The side rail 24 holds the end plate 26, the plurality of battery cells 1, the plurality of spacers 21, and the end plate 27 in a state of being pressed in the arrangement direction. The side rail 24 has a connecting portion 24c and the bend portions 24b, the bolts 28 are inserted into fixing holes 24a in the bend portions 24b, and the side rail 24 is fixed to the end plates 26 and 27.

The side rail 25 has the same structure as the side rail 24 in a mirror symmetry. The side rail 25 is formed of the same metallic material as the side rail 24 and has the same function as the side rail 24. The side rail 25 is disposed to face the side rail 24 in the y direction across the arranged battery cells 1 and has a rail main body 25c that extends in the x direction and bend portions 25b that are bent at both end portions of the rail main body 25c in the x direction and face each other. The bend portion 25b has fixing holes 25a into which the bolts 28 are inserted.

In Fig. 3, the busbar case assembly 12 includes a busbar 31, two busbar cases 35, a gas exhaust duct 234, two covers 34, and a busbar case 35. In addition, while not shown in Fig. 3, a harness including a voltage detection line or a flexible wiring board is included in the busbar case assembly 12.

In Fig. 3, the busbar 31 has intercell busbars 31a, a negative electrode busbar 31b, and a positive electrode busbar 31c, as shown in Fig. 4 as well, and each configuration element has been housed in a frame formed in the busbar case 35. The intercell busbar 31a has a configuration that electrically connects the positive electrode terminal 4 of the battery cell 1 and the negative electrode terminal 5 of another adjacent battery cell 1. The negative electrode busbar 31b and the positive electrode busbar 31c are connected to external terminals.

In Fig. 3 and Fig. 4, the busbar case 35 has a detection circuit housing portion 36 for housing a detection circuit group. The detection circuit group may be, for example, a wire harness including a wiring group for measuring the voltage or temperature of a battery (hereinafter, referred to as "harness") or may be a flexible wiring board having the same purpose. The detection circuit group in the present specification may include a terminal portion, an electric wire portion, a sensor portion, and a connector portion in some cases. The sensor portion is in contact with the battery lid 3, measures the temperature of the battery lid 3 and outputs measurement results.

The gas exhaust duct 234 has a gas exhaust opening 233, isolates and collects gas that is exhausted from the gas exhaust valves 6 in the center in the y-direction and exhausts the gas from the gas exhaust opening 233. The gas exhaust duct 234 is fixed to female threads of the first end plate 26 and the second end plate 27 with screws disposed at both ends in the x direction. The two covers 34 have a function of insulating and protecting the configuration elements of the busbar case assembly 12 and have been disposed to cover the busbar 31 and the detection circuit group. Each cover 34 has been fitted into and fixed to the busbar case 35. The busbar case 35 has a frame for forming a plurality of busbar housing portions 37 that are lined up in the arrangement direction of the battery cells 1 and is configured to individually store the intercell busbars 31a, the negative electrode busbar 31b, and the positive electrode busbar 31c in the frame.

Fig. 4 is a plan view of the busbar cases 35 seen from above. In Fig. 4, the gas exhaust duct 234 extends in the x direction in the center in the y direction, and the busbar cases 35 are disposed with the gas exhaust duct 234 interposed therebetween in the y direction. In each of the busbar cases 35, the busbar housing portions 37 that individually store the intercell busbars 31a, the negative electrode busbar 31b, and the positive electrode busbar 31c are arrayed in the x direction.

In addition, in each of the busbar cases 35, the detection circuit housing portion 36 for housing the detection circuit group has been formed. Here, the detection circuit group may be a harness or may be a flexible wiring board. There are also cases where a detection circuit is disposed on, for example, the gas exhaust duct 234.

Fig. 5 is a plan view showing a case where flexible wiring boards 40 are used as the detection circuit group. In Fig. 5, the busbar cases 35 and the gas exhaust duct 234 are as described in Fig. 4. The flexible wiring boards 40 have been disposed in the detection circuit housing portions 36. Each of a plurality of wires 41 formed in the flexible wiring boards 40 is connected to the busbars 31a, 31b, and 31c and sends detected voltages to a signal processing circuit 45. In addition, signals from a thermistor or the like in contact with the battery are sent to the signal processing circuit 45 for temperature detection.

In Fig. 5, the signal processing circuit 45 is disposed on the gas exhaust duct 234. The signal processing circuit 45 processes the voltage of the battery, signals from the thermistor and the like and performs necessary control. In a case where the circuit scale becomes large, signal processing for performing necessary control may be executed by a method in which a signal is sent to the outside wirelessly, a control signal is created with a signal processing circuit disposed outside, and this signal is again imported wirelessly.

In Fig. 5, the signal processing circuit 45 is disposed on the gas exhaust duct 234. Therefore, as shown in Fig. 6, a circuit board protective cover 47 is used to protect the signal processing circuit 45. As a specific configuration, for example, a notch is formed in a part of the cover 34, and a part of the flexible wiring board 40 is drawn to the outside from the portion of this notch and is disposed on the gas exhaust duct 234. The flexible wiring boards 40 exposed on the outside are protected with the circuit board protective cover 47. The circuit board protective cover 47 is formed of an insulating material such as a resin.

In Fig. 5, both the wires 41 for importing signals and the signal processing circuit 45 have been formed on the same flexible wiring board 40. Since the flexible wiring boards 40 on which the wires 41 have been formed are present on the bottoms of the detection circuit housing portions 36, and the signal processing circuit 45 is disposed on the gas exhaust duct 234, a level difference has been formed. However, the flexible wiring boards 40 in which the base material is formed of a resin such as polyimide are capable of flexibly overcoming this level difference. Each wire 41 formed on the flexible wiring boards 40 is branched and connected to each busbar 31, and each wire 41 becomes mechanically stronger when being branched together with the resin such as polyimide, which is the base material.

In Fig. 5, the signal processing circuit 45 is disposed on the gas exhaust duct 234, but it is also possible to dispose a signal processing circuit in each detection circuit housing portion depending on the layout of the flexible wiring boards 40. In this case, since the circuit scale cannot be increased in consideration of the space, it becomes frequent to send data to a signal processing circuit disposed outside and create a control signal.

The above configuration is about a case where the detection circuit group is made up of the flexible wiring boards 40, but the configuration is still the same even in a case where the detection circuit group is formed of a harness. In a case where the detection circuit group is made up of a harness, the configuration becomes bulkier than that in the case of flexible wiring boards; however, basically, it is possible to have the same configuration. The configuration of the detection circuit group described above can also be applied to a configuration of an example of the present invention where there are no busbar cases, which will be described in Example 1.

In the examples of Fig. 3 to Fig. 5, two busbar cases are used. The size of the busbar case 35 is the same as that of the block, which is an arrangement of batteries, in at least the x direction, but the external shape is large, which makes it take longer for development. There is also a case where there is one busbar case in the configuration, which, basically, does not make any difference. In addition, the manufacturing cost of the busbar case 35 is also high. Furthermore, when there is a difference in coefficient of thermal expansion between the busbar case 35 and the block 11, which is an arrangement of batteries, a case where stress is generated in a component whenever the temperature of the battery pack increases can be considered. A configuration to be described in the following examples is a configuration enabling a busbar to be housed without using the busbar case 35 separately independent of the spacer to improve such problems.

### [Example 1]

Fig. 7 is an exploded perspective view of a block 11, which is an arrangement of batteries, of Example 1. A feature of Example 1 is that a busbar case can be omitted. In Example 1, as shown in Fig. 7, detection circuit housing portions 36 and busbar housing portions 37 have been formed depending on the shapes of a plurality of spacers 21 and 22 in the block.

In Fig. 7, a plurality of battery cells 1 have been arranged in an x direction with the first spacers 21 or the second spacers 22 interposed therebetween. The spacers 21 and the spacers 22 alternately partition the battery cells 1 in the x direction. The spacers 21 and the spacers 22 are the same configuration except that the positions of partition walls 60 that configure busbar housing portions 37 are different. Each of the spacers 21 and 22 has side portion covers 80, and the battery cells 1 are housed in spaces that are formed by abutting the side portion covers 80.

Since the spacers 21 and the spacers 22 are the same configuration except that the positions of the partition walls 60 are different, the spacer 21 will be mainly described. At the upper end of each of the spacers 21 and 22, two wire housing portions 50 having a U-like cross section have been formed. U-like portions extend in a +y direction of the spacers. The plurality of U-like portions are disposed at intervals. The wire housing portions 50 are formed at positions that are linearly symmetrical with respect to the central line of the spacers in the y direction. Since the wire housing portions 50 have been formed at the same positions in both the spacers 21 and the spacers 22, when the spacers 21, the spacers 22, and the battery cells 1 are arranged together in the x direction, the detection circuit housing portions 36, which look like U-like grooves extending in the x direction, are formed.

In Fig. 7, the spacers 21 and the spacers 22 have been continuously arranged together in the x direction with the battery cell 1 interposed therebetween. A rib 70 has been formed in the vicinity of the end portion of the spacer in the +y direction. The ribs 70 are arranged together so as to be abutted in the x direction and form an almost continuous bank. The end portions of the spacers in the +y direction are partitioned by each of the ribs 70 of the spacers adjacent to each other.

In the vicinity of the end portion in the +y direction, the partition wall 60 has been formed between the ribs 70 and the wire housing portions 50 having a U-like cross section (hereinafter, also referred to as "U-like portions 50"). The partition wall 60 forms a part of the spacer 21. On the other hand, in this portion, the partition wall 60 is not formed in the spacer 22 adjacent to the spacer 21 in a +x direction. The partition wall 60 has been formed in the spacer 21 adjacent to the spacer 22 in the +x direction. Therefore, at the end portion in the +y direction, a space surrounded by the U-like portion 50, the partition wall 60, and the rib 70 is formed. In Example 1, this space is used as the busbar housing portion 37. In Fig. 7, the busbar housing portions 37 have been continuously arrayed in the x direction while being partitioned by the partition walls 60 at the end portions of the spacers 21 and 22 in the +y direction.

In Fig. 7, the partition walls 60 are formed in the spacers 22 in the vicinities of the end portions in a -y direction, but the partition walls 60 are not formed in the spacers 21. Therefore, in the vicinities of the end portions in the -y direction, the busbar housing portions 37 are formed between the partition wall 60 formed in the spacer 22 and the partition wall 60 formed in a different spacer 22. In the vicinity of the end portion in the -y direction as well, it is the same as on the +y side that the busbar housing portion 37 is formed by the U-like portion 50, the partition wall 60 and the rib 70.

In Fig. 7, in a case where the pitch between the busbar housing portions 37 in the x direction is denoted as px, the busbar housing portion 37 that is formed in the +y direction and the busbar housing portion 37 that is formed in the -y direction deviate from each other in the x direction by px/2. In Fig. 7, in the busbar housing portion 37, a positive electrode terminal 4 of the battery cell 1 and a negative electrode terminal 5 of a different battery cell 1 have been housed. The positive electrode terminal 4 and the negative electrode terminal 5 are connected to each other with a busbar 31a in the busbar housing portion 37 as shown in Fig. 7.

As described in Fig. 7, in the vicinities of the end portions in the +y direction, the busbar housing portions 37 partitioned by the partition walls 60 have been continuously formed in the x direction, and in the vicinities of the end portions in the -y direction as well, the busbar housing portions 37 partitioned by the partition walls 60 have been continuously formed in the x direction. That is, the same configuration as the busbar housing portion 37 formed of the two busbar cases shown in Fig. 3 has been also formed in Fig. 7. In addition, the detection circuit housing portions formed in the two busbar cases 35 shown in Fig. 3 are also realized by the two rows of U-like portions.

As described above, the use of the configuration of Fig. 7 makes it possible to form the same structure simply by changing the shapes of the upper portions of the spacers 21 and 22 even without using the busbar cases 35. Therefore, it is possible to save the manufacturing cost of the busbar cases 35, and it is also possible to save the development period of the busbar cases 35. Furthermore, it is possible to remove stress during the operation and the non-operation of a battery that is attributed to a difference in coefficient of thermal expansion between the block 11, which is an arrangement configuration of the battery cells 1, and the busbar cases 35, and it is thus possible to improve the reliability.

In Fig. 7, in the upper portions of the spacers 21 and the spacers 22 in a z direction, the U-like portions 50, the partition walls 60, the ribs 70, and the like are formed, which creates a slightly complicated shape. However, the spacers 21 and 22 are formed of a resin and are formed with a mold. The spacers 21 and 22 can be provided as integral components of a resin. That is, once a mold is designed and the spacers are manufactured, the spacers can be repeatedly used afterwards. Therefore, the manufacturing cost does not increase.

In addition, the spacers 21 and the spacers 22 have different shapes, but different portions are only the portions of the partition wall 60. In Fig. 7, in the spacer 21, the partition wall 60 has been formed in the vicinity of the end portion in the +y direction, but the partition wall 60 is not formed in the vicinity of the end portion in the -y direction. On the other hand, in the spacer 22, the partition wall 60 is not formed in the vicinity of the end portion in the +y direction, but the partition wall 60 has been formed in the vicinity of the end portion in the -y direction.

That is, the spacers 21 and the spacers 22 have a line symmetry relationship with respect to the z axis including the center in the y direction. Therefore, the spacers 21 and the spacers 22 are formed with the same mold, and the spacers 21 and the spacers 22 need to be used in a horizontally flipped state during use. That is, although there are the spacers 21 and 22, since the spacers can be manufactured by forming with a single mold, the manufacturing cost does not increase.

Fig. 7 also shows a perspective view showing a state where the busbar 31a is installed in the busbar housing portion 37 and a state where a flexible wiring board 40 is disposed in the detection circuit housing portions 36. In the busbar 31a, a phosphor bronze plate material and an aluminum or aluminum alloy plate material have been pasted together by, for example, butt welding. The busbar 31a is obtained by combining aluminum, which is the positive electrode terminal 4 of the battery cell 1, and copper, which is the negative electrode terminal. The busbars 31a are installed in the positive electrode terminals 4 and the negative electrode terminals 5 of the battery cells 1 by laser welding, fastening, or the like. In addition, a voltage detection terminal is formed in the busbar 31a and is connected to a wire branched from the flexible wiring board 40 disposed in the detection circuit housing portions 36.

Fig. 7 shows a state where the flexible wiring board 40 is disposed in the detection circuit housing portions 36 formed of the U-like portions 50. In the flexible wiring board 40, a number of wires 41 extending in the x direction are formed, and each wire 41 is branched and connected to the voltage detection terminal formed in the busbar 31a. In addition, in the wires 41 formed in the flexible wiring board 40, a wire for connection with a thermistor installed in the battery cell 1 is also included.

The schematic shape of the flexible wiring board 40 is generally the same as that of the flexible wiring board 40 in Fig. 5. However, in Fig. 5, the flexible wiring board 40 has been disposed in the detection circuit housing portion 36 formed in the busbar case 35; however, in Fig. 7, the busbar case 35 is not present, and the flexible wiring board 40 has been disposed in the detection circuit housing portions 36 formed of the U-like portions 50 formed in the spacers 21 and the spacers 22.

In Fig. 7, a gas exhaust duct 234 is disposed to cover gas exhaust valves 6 of the battery cells 1 as shown in Fig. 3 to Fig. 6. In addition, covers 34 shown in Fig. 3 to Fig. 6 directly cover the detection circuit housing portions 36 formed in the U-like portions 50 and the busbar housing portions 37. A signal processing circuit in a detection circuit group is disposed on the gas exhaust duct in the same manner as shown in Fig. 5.

That is, as described in Fig. 5 and Fig. 6, a notch is formed in a part of the cover 34, and a part including a signal processing circuit 45 in the flexible wiring board 40 is disposed on the gas exhaust duct 234. In addition, the signal processing circuit 45 is covered with a protective cover 47. Therefore, even in the configuration of Fig. 7, the appearance of a battery module is the same as that in Fig. 6.

Incidentally, in Fig. 7, the flexible wiring board 40 is used as the detection circuit group, but a case where a harness that is disposed in the detection circuit housing portions 36 formed of the U-like portions 50 is used instead of the flexible wiring board 40 is also the same. That is, instead of the flexible wiring board 40, the harness is disposed in the detection circuit housing portions 36 formed of the U-like portions 50. In addition, each wire in the harness is connected to the voltage detection terminal formed in the busbar 31a. On the other hand, the disposition of the signal processing circuit 45 on the gas exhaust duct 234 is the same. In the case of the harness, the signal processing circuit 45 is separately formed on the gas exhaust duct 234. In addition, the signal processing circuit 45 is covered with the protective cover 47. The bulk of wires in the harness becomes large compared with that in the case of the flexible wiring board, but the basic appearance of the battery module is the same as shown in Fig. 6.

Fig. 8 is an enlarged perspective view of the block 11, which is an arrangement of the battery cells 1 in Example 1. The basic configuration of the block 11 is the same as described in Fig. 7. That is, at the upper ends of the spacers 21 and 22, the U-like portions 50 are formed, detection circuit housing portions 36 are formed, and the busbar housing portions 37 have been formed in regions surrounded by the U-like portion 50, the partition wall 60 and the rib 70. This configuration makes it possible to protect the busbars 31a and the voltage detection terminals installed in the busbars 31a.

In Fig. 8, the height h1 of the partition wall 60 is the difference between the height of the spacer in the z direction in a portion where there is no partition wall 60 and the height of the spacer in the z direction in a portion where there is the partition wall 60. In addition, the height h1 of the partition wall 60 can also be said to be the same as the height h1 of the U-like portion 50.

In Fig. 8, the U-like portion 50 is disposed at a position higher in the z direction than a position where the busbar 31a is installed. This makes it easy to connect the wires branched from the flexible wiring board 40 that is disposed in the detection circuit housing portions 36 that are formed of the U-like portions 50 and the voltage detection terminals that are installed in the busbars 31a. This is also true even in a case where the detection circuit group is formed of not the flexible wiring board 40 but the harness.

In Fig. 8, in the busbar housing portion 37 partitioned by the partition wall 60, the positive electrode terminal 4 of the battery cell and the negative electrode terminal 5 of a different battery cell are present, and the positive electrode terminal 4 and the negative electrode terminal 5 are connected to each other with the busbar 31. The positive electrode terminal 4 and the negative electrode terminal 5 have been partitioned with the spacer 22. However, there is also a case where a partition wall 61 having a lower height than the partition wall 60 is disposed due to a request of the installation of the busbar 31a or the like. However, even in this case, it is desirable that the partition wall 61 is lower than the height of the busbar 31a.

Fig. 9 is a perspective view showing a state where a plurality of the battery cells 1 are arranged together in the x direction with the spacers 21 or the spacers 22 interposed therebetween. The arranged battery cells 1 have been sandwiched by end plates 90. The gas exhaust valve 6 has been disposed in the central portion of each battery cell 1 in the y direction. Therefore, the gas exhaust valves 6 are arrayed at constant pitches in the x direction. The gas exhaust duct 234 shown in Fig. 3 and the like are disposed to cover this row of the gas exhaust valves.

In Fig. 9, on both sides of the row of the gas exhaust valves in the y direction, the detection circuit housing portions 36 have been formed of the U-like portions 50 formed in the spacers 21 and the spacers 22. The detection circuit housing portions 36 extend in the x direction. In Fig. 9, the busbar housing portions 37 have been formed on the outside of the detection circuit housing portions 36. The busbar housing portions 37 have been partitioned by the partition walls 60 formed in the spacers 21 on a side in the +y direction and have been partitioned by the partition walls 60 formed in the spacers 22 on a side in the -y direction.

When the pitch between the busbar housing portions 37 in the x direction is denoted as px, the position of the busbar housing portion 37 on the +y side and the position of the busbar housing portion 37 on the -y side deviate from each other in the x direction by px/2. In each busbar housing portion 37, the positive electrode terminal 4 of the battery cell 1 and the negative electrode terminal 5 of an adjacent battery cell have been housed. The positive electrode terminal 4 and the negative electrode terminal 5 are connected to each other with the busbar 31a by laser welding, fastening, or the like.

In Fig. 9, wires for a detection circuit 40 shown in Fig. 7 are disposed in the detection circuit housing portions 36. The wires for a detection circuit are the flexible wiring board 40 in some cases or a harness in some cases. In any cases, each wire 41 in the wires for a detection circuit 40 is connected to the voltage detection terminal formed in the busbar 31a that is disposed in the busbar housing portion 37. After that, the covers 34 shown in Fig. 3 are disposed to cover the detection circuit housing portions 36 that extend in the x direction and the busbar housing portions 37 that are arrayed in the x direction. The covers 34 are respectively disposed on either side of the gas exhaust duct 234 in the y direction.

In a case where the signal processing circuit 45 is disposed on the outside of the gas exhaust duct in the detection circuit group in the same manner as described in Fig. 5 and Fig. 6, a notch is formed in a part of the cover 34, and the flexible wiring board 40 or a harness is guided to the signal processing circuit 45 disposed on the outside of the gas exhaust duct from this notch. After that, the signal processing circuit 45 is covered with the protective cover 47 and protected.

In Fig. 3, which is the comparative example, and the like, since the busbar cases 35 are present, the covers 34 and the like may be installed in the busbar cases 35. However, in the examples of the present invention, since the busbar case 35 separately independent of the spacer is not present, the covers 34 are bonded to the spacers 21 and 22. As a method for bonding the covers 34 and the spacers 21 and 22, there is a variety of means such as bolt tightening or claw locking. When means for fixing the covers 34 to the spacers 21 and 22 is provided, it is possible to reduce the number of components, which can lead to cost reduction.

### [Reference Signs List]

- 1: Battery cell
- 2: Battery can
- 3: Battery lid
- 4: Positive electrode terminal
- 5: Negative electrode terminal
- 6: Gas exhaust valve
- 7: Liquid injection plug
- 10: Battery pack
- 11: Block
- 20: Spacer
- 21: Spacer
- 22: Spacer
- 24: Side rail
- 25: Side rail
- 26: End plate
- 27: End plate
- 31a: Busbar
- 31b: Busbar
- 31c: Busbar
- 35: Busbar case
- 36: Detection circuit housing portion
- 37: Busbar housing portion
- 40: Flexible wiring board
- 41: Wire
- 45: Signal processing circuit
- 47: Circuit board protective cover
- 50: U-like portion
- 60: Partition wall
- 61: Low-height partition wall
- 70: Rib
- 80: Side portion cover of spacer
- 90: End plate
- 233: Gas exhaust hole
- 234: Gas exhaust duct

## Claims

1. A battery pack in which a plurality of battery cells having a rectangular external shape are arranged in a first direction,
wherein a first spacer having a rectangular external shape or a second spacer having a rectangular external shape is disposed between each pair of adjacent battery cells,
the first spacer has a first side that extends in a second direction at a right angle to the first direction,
a first U-like portion that has a U-like cross section and extends in the first direction is formed in the first side,
a first partition wall that extends in the second direction is formed on an outside of the first U-like portion in the second direction,
the second spacer has a second side that extends in the second direction,
a second U-like portion that has a U-like cross section and extends in the first direction is formed in the second side,
a busbar housing portion is formed between the first partition wall formed in the first spacer and a different first partition wall formed in a different first spacer adjacent to the first spacer in the first direction, and
the first U-like portions and the second U-like portions are continuously formed in the first direction and form wire housing portions that extend in the first direction.

2. The battery pack according to claim 1,
wherein the busbar housing portions are partitioned in the second direction by the first U-like portions and the second U-like portions.

3. The battery pack according to claim 1,
wherein the first spacer has a first rib at an end portion in the second direction,
the second spacer has a second rib at an end portion in the second direction, and
end portions in the second direction of the busbar housing portions are partitioned by the first ribs and the second ribs.

4. The battery pack according to any one of claims 1 to 3,
wherein the first spacer is formed as an integral component of a resin, and
the second spacer is formed as an integral component of a resin.

5. The battery pack according to any one of claims 1 to 4,
wherein a gas exhaust duct that covers the plurality of battery cells, the first spacers, and the second spacers, and that extends in the first direction is formed,
in the second direction, the wire housing portions are formed on an outside of the gas exhaust duct, and the busbar housing portions are formed on an outside of the wire housing portions.

6. The battery pack according to any one of claims 1 to 5,
wherein a height of the first partition wall in a third direction at a right angle to the first direction and the second direction is the same as heights of the first U-like portions and the second U-like portions.

7. The battery pack according to any one of claims 1 to 6,
wherein the battery pack does not include a busbar case, as a single component, having a plurality of the busbar housing portions and the wire housing portion.
